# EUROPÄISCHE PATENTANMELDUNG

(11) **EP 4 530 233 A1**
(43) Veröffentlichungstag der Anmeldung: **02.04.2025**
(21) Anmeldenummer: 23200165.1
(22) Anmeldetag: 27.09.2023
(51) Int. Cl.: B65G 47/61, B07C 3/08

(54) **ROBOTERGESTÜTZTE BELADE- UND/ODER ENTLADESTATION FÜR EINEN TASCHENSORTER**

(71) Anmelder: BEUMER Group GmbH & Co. KG, 59269 Beckum (DE)
(72) Erfinder: Jonser, Maximilian, 8280 Fürstenfeld (AT)
(74) Vertreter: Angerhausen, Christoph

(57) **Zusammenfassung**

Die Erfindung betrifft eine Belade- und/oder Entladestation (1) für einen Taschensorter (100), mit einer Taschenzuführung (2) und einem Roboter (3), der dazu eingerichtet ist, an wenigstens einer Übergabestelle (4) der Belade- und/oder Entladestation (1) Objekte in eine an der Übergabestelle (4) von der Taschenzuführung (2) bereitgestellte Tasche (5) zu laden oder daraus zu entladen.

## Beschreibung

Die Erfindung betrifft eine Belade- und/oder Entladestation für einen Taschensorter. Eine derartige Belade- und/oder Entladestation ist aus der EP 3 575 246 A1 bekannt. Eine ähnliche Vorrichtung beschreibt auch die US 10296870 B1. Eine konventionelle Belade- und/oder Entladestation sowie ein Taschensorter sind in der DE 10 2019 205 980 A1 beschrieben.

Die aus dem Stand der Technik bekannten Vorrichtungen haben den Nachteil, dass die Tasche für die Beladung und/oder Entladung aus der vertikalen Flucht einer Förderschiene herausgeschwenkt werden muss, um eine obere Öffnung der Tasche freizulegen. Das Verschwenken der Tasche um beispielsweise 90° ist insbesondere bei hohen Fördergeschwindigkeiten beziehungsweise Taktraten mit entsprechend hohen auf die Tasche wirkenden Kräften verbunden, was sich nachteilig auf den zuverlässigen Betrieb des Taschensorters auswirkt.

Es ist daher die Aufgabe der Erfindung, eine Belade- und/oder Entladestation für einen Taschensorter vorzustellen, die prozesssicher auch bei hohen Fördergeschwindigkeiten der Taschen betrieben werden kann.

Diese Aufgabe wird von einer Vorrichtung mit den Merkmalen des Anspruchs 1 gelöst. Die abhängigen Ansprüche betreffen jeweils vorteilhafte Ausführungsformen der Erfindung.

Demgemäß ist vorgesehen, dass die Belade- und/oder Entladestation für einen Taschensorter eine Taschenzuführung und einen Roboter aufweist, der dazu eingerichtet ist, an wenigsten einer Übergabestelle der Belade- und/oder Entladestation Objekte in eine an der Übergabestelle von der Taschenzuführung bereitgestellte Taschen zu laden oder daraus zu entladen.

Die Taschenführung kann dazu eingerichtet sein, die Tasche unter Beibehaltung ihrer Ausrichtung der Übergabestelle für die Beladung und/oder Entladung zuzuführen und von dieser unter Beibehaltung ihrer Ausrichtung abzuführen. Vorzugsweise wird die Tasche entlang einer Förderstrecke der Taschenzuführung in einer kontinuierlichen oder getakteten Bewegung, vorzugsweise in einer gleichmäßigen getakteten Bewegung, gefördert. Dabei sollen bevorzugt außer in der Förderrichtung keine äußeren Kräfte auf die Tasche einwirken, insbesondere keine Drehmomente um die vertikale Achse der Tasche. Eine Taschendrehung ist nicht erforderlich.

Die Taschenzuführung kann demgemäß eine Förderschiene, beispielsweise eine gerade Förderschiene sein, die im Wesentlichen horizontal geführt ist. Es kann vorgesehen sein, dass mit der Taschenzuführung die Taschen des Taschensorters unter einem Abstand von dem Roboter an dem Roboter vorbeigeführt sind. Die Taschen können beispielsweise tangential zu einem Bewegungszirkel des Roboters an dem Roboter vorbeigeführt sein. An der Übergabestelle kann die Taschenzuführung, insbesondere eine Förderschiene eines Taschensorters, dem Roboter maximal angenähert sein, mindestens jedoch insoweit, als dass die mindestens eine zu beladende oder entladende Tasche im Zugriffbereich des Roboters angeordnet ist.

Die Taschenzuführung kann an der Übergabestelle eine Taschenöffnung aufweisen, beispielsweise eine Anlaufschiene, die an einem Tragrahmen der Tasche angreift und dazu eingerichtet ist, den Tragrahmen in eine horizontale Ausrichtung zu drücken, mithin um den Aufhängungspunkt des Tragrahmens an dem Mitnehmer der Tasche, welcher entlang der Taschenzuführung gefördert ist, zu verschwenken. Dadurch kann erreicht werden, dass eine obere Öffnung der Tasche und/oder eine seitliche, teilweise oder vollständig offene, Seitenwand geöffnet oder zumindest vergrößert wird und somit der Zugriff in das Innere der Tasche für den Roboter erleichtert wird. Das Öffnen der Tasche kann auch dazu dienen, einen Tascheninhalt sensorisch zu erfassen, beispielsweise hinsichtlich einer geometrischen, physikalischen oder sonstigen Eigenschaft, oder zur Auslesung einer Identifizierung eines Objekts, beispielsweise eines Barcodes, QR-Codes oder dergleichen.

Das Öffnen der Tasche kann an der Übergabestelle auch dadurch realisiert sein, dass die Tasche an der Übergabestelle angehoben ist. Dazu kann an der Übergabestelle beispielsweise der Boden der Tasche angehoben sein. Dies kann dadurch realisiert sein, dass die Tasche auf einer Unterlage aufliegt, wenn sie an der Übergabestelle angeordnet ist. Dazu kann die Tasche beim Anfahren der Übergabestelle in der Förderrichtung der Tasche auf eine Anlaufschräge auflaufen. Alternativ oder zusätzlich kann an der Übergabestelle ein Hubtisch angeordnet sein, welcher den Taschenboden anhebt und dazu in der Vertikalrichtung verstellbar ist. Durch das Anheben der Tasche bzw. durch die Unterstützung des Taschenbodens beim Aufliegen der Tasche auf der Unterlage wird die auf den Tragrahmen wirkende Schwerkraft verringert, wodurch sich der Tragrahmen öffnen kann, mithin weiter in Richtung einer horizontalen Ausrichtung verschwenkt wird.

Wenn in der vorliegenden Anmeldung beschrieben ist, dass die Tasche unter Beibehaltung ihrer Ausrichtung transportiert wird, so ist damit insbesondere gemeint, dass die Tasche keine Drehung um ihre Vertikalachse erfahren muss. Insbesondere ist es nicht erforderlich, dass die Tasche für das Beladen und/oder Entladen mit ihrer oberen Öffnung aus der vertikalen Flucht der Taschenzuführung beziehungsweise einer Förderschiene der Taschenzuführung herausgeschwenkt wird. Die Tasche kann somit beispielsweise auch für die Beladung und Entladung mit ihren im Vergleich zu den Seitenwänden breiteren Vorder- und Rückwänden senkrecht zur Förderrichtung entlang der Taschenzuführung beziehungsweise der Förderschiene ausgerichtet bleiben. Besonders bevorzugt erfolgt zumindest die Taschenentladung durch Zugriff auf den Tascheninhalt durch eine der im Vergleich zu den Vorder- und Rückwänden schmaleren, offenen Seitenwände der Tasche. Auch das Beladen der Tasche kann über die schmale Seitenwand erfolgen. Das Beladen kann alternativ über die obere Öffnung der Tasche erfolgen. Bei der letztgenannten Ausführungsform ist es zweckmäßig, dass die Tasche an der Übergabestelle oder in Vorschubrichtung der Tasche entlang der Taschenzuführung unmittelbar davor geöffnet wird. Dazu kann der Tragrahmen an der oberen Öffnung, insbesondere ein Tragrahmen, der die obere Öffnung begrenzt, in die Horizontale geschwenkt werden, beispielsweise mithilfe einer Anlaufschiene, wie es etwa in der EP 2 418 160 B1 beschrieben ist. Abweichend von der Lehre der EP 2 418 160 B1 muss erfindungsgemäß die Tasche für das Beladen und Entladen jedoch nicht um 90° aus der vertikalen Flucht der Schiene herausgedreht werden.

Bei einer besonderen Ausführungsform ist jeweils eine Übergabestelle an gegenüberliegenden Seiten des Roboters ausgebildet. Dazu können die Übergabestellen jeweils eine Taschenzuführung, insbesondere eine zumindest abschnittsweise horizontale Förderschiene aufweisen, die unter einem Abstand zueinander und vorzugsweise auf derselben Höhe angeordnet sind, wobei der Roboter in Horizontalrichtung zwischen den Übergabestellen angeordnet ist und somit zu seinen beiden gegenüberliegenden Seiten auf die beiden Übergabestellen zugreifen kann.

Die in die Taschen zu beladenden Objekte beziehungsweise die aus den Taschen entladenden Objekte können dem Roboter auf verschiedene Weise zugeführt beziehungsweise von ihm abgenommen werden. Bei einer Ausführungsform werden sie an einer Übergabestation von einer Person bereitgestellt beziehungsweise abgenommen. Bei einer anderen Ausführungsform erfolgt die Bereitstellung mit Hilfe eines Sorters, beispielsweise eines Liegesorters, vorzugsweise eines Quergurtsorters oder eines Kippschalensorters. Für das Bereitstellen von Objekten kann der Liegesorter eine Endstelle aufweisen, aus denen der Roboter das in die Taschen zu ladende Objekt entnimmt. Für die Entladung kann der Liegesorter eine Einschleusung aufweisen, mit dem die von dem Roboter aus der Tasche entladenen und auf der Einschleusung abgelegten Objekte auf den Liegesorter eingeschleust werden.

Die Übergabestation kann eine Objekterkennung, insbesondere eine kamerabasierte Objekterkennung aufweisen, die dazu eingerichtet ist, eine relative Ausrichtung eines in der Tasche aufgenommenen und von dem Roboter zu entnehmenden Objekts zu bestimmen und eine Greifbewegung des Roboters nachzuführen.

Der Roboter kann beispielsweise ein Mehrachsroboter, vorzugsweise ein Knickarmroboter sein und/oder einen Endeffektor mit einem Greifer aufweisen. Der Greifer kann ein Zangengreifer oder ein Vakuumgreifer sein.

Wenn die Tasche mindestens eine offene Seitenwand aufweist, kann der Roboter dazu eingerichtet sein, über die offene Seitenwand in die Tasche einzugreifen. Die offenen Seitenwand kann parallel zur Förderrichtung der Taschenzuführung beziehungsweise einer Förderschiene der Taschenzuführung ausgerichtet sein. Die Tasche kann an gegenüberliegenden Seiten eine identische offene Seitenwand aufweisen. Die Tasche kann weiterhin geschlossene Vorder- und Rückwände aufweisen. Die geschlossenen Vorder- und Rückwände können breiter als die Seitenwände sein. Dadurch, dass die Tasche in Förderrichtung schmale Seitenwände und senkrecht dazu im Vergleich breitere Vorder- und Rückwände aufweist, weist die Tasche auch im beladenen Zustand in der Förderrichtung eine vergleichsweise geringe Dicke bei hohem Fassungsvolumen auf, wodurch die Ladekapazität des Taschensorters erhöht wird.

Bevorzugt ist somit der Roboter dazu eingerichtet, quer, vorzugsweise senkrecht, zur Förderrichtung der Taschenzuführung an der Übergabestelle in die Tasche einzugreifen.

Die Übergabestelle kann eine Taschenöffnung aufweisen, die vorzugsweise mindestens eine Druckschiene aufweist oder als eine solche ausgebildet ist und die dazu eingerichtet ist, eine Öffnung eines Tragrahmens der Tasche, über den die Tasche in einen Mitnehmer des Taschensorters eingehängt ist, aus einer zur horizontalen verschwenkten Ausrichtung in die Horizontale oder zumindest weiter in Richtung der Horizontalen zu schwenken.

Das Öffnen der Tasche kann dazu dienen, die offene Seitenwand aufzuspannen, mithin den seitlichen Öffnungsquerschnitt der Tasche zu erhöhen. Ebenso kann das Aufschwenken des Tragrahmens dazu dienen, den Tragrahmen selbst und damit die obere Öffnung der Tasche zu öffnen beziehungsweise weiter zu öffnen.

Der Roboter kann demnach dazu eingerichtet sein für das Beladen einer Tasche ein Objekt oberhalb von einer an der Übergabestelle offenliegenden Öffnung eines Tragrahmens einer zu beladenden Tasche in die Tasche fallen zu lassen oder durch die Öffnung hindurch in die Tasche einzulegen.

Die Taschenzuführung kann eine Förderschiene eines Taschensorters sein, entlang der die Taschen mit ihrer breiten Vorder- und Rückseite quer zur Förderrichtung und unter Aufrechterhaltung ihrer Ausrichtung an der Übergabestelle vorbei gefördert sind.

Es kann vorgesehen sein, dass an gegenüberliegenden Seiten des Roboters jeweils eine Taschenzuführung mit einer Übergabestelle angeordnet ist. Dabei kann der Roboter dazu eingerichtet sein, ein Objekt, das in einer Tasche an einer ersten der beiden gegenüberliegenden Übergabestellen bereitgestellt ist, aus der Tasche zu entnehmen und in eine weitere Tasche zu laden, die an der zweiten der beiden gegenüberliegenden Übergabestellen bereitgestellt ist. Alternativ oder zusätzlich kann der Roboter dazu eingerichtet sein, Objekte von einem weiteren Förderer, beispielsweise einem Förderband oder einem Liegesorter, abzunehmen und in die Taschen an den gegenüberliegenden Übergabestellen zu laden oder von den Taschen zu entladen und auf dem Förderband beziehungsweise Liegesorter abzulegen.

Die Belade- und/oder Entladestation kann somit eine Schnittstelle zwischen einem Taschensorter und einem Liegeförderer bilden. Weitere Ausführungsformen der Erfindung umfassen daher eine Anordnung aus einer Belade- und/oder Entladestation der zuvor beschriebenen Art, einem Taschensorter und einem Liegeförderer, vorzugsweise einem Liegesorter, beispielsweise einem Quergurtsorter oder einem Kippschalensorter. Der Liegeförderer kann dabei eine Förderstrecke aufweisen, die sich durch einen Zugriffsbereich des Roboters hindurcherstreckt. Der Roboter kann dabei dazu eingerichtet sein, Objekte von dem Liegeförderer abzunehmen und an der Übergabestelle in eine Tasche zu laden. Anstelle die Objekte unmittelbar von dem Liegeförderer abzunehmen, kann auch vorgesehen sein, dass der Liegeförderer von dem Roboter abzunehmenden Objekte in einer Endstelle übergibt, beispielsweise abwirft, aus welcher der Roboter das Objekt entnimmt. Alternativ oder zusätzlich kann der Roboter dazu eingerichtet sein, Objekte aus einer Tasche an der Übergabestelle zu entnehmen und auf dem Liegeförderer oder einer Einschleusung des Liegeförderers abzulegen.

Der Liegeförderer kann dazu eingerichtet sein, Versandbehälter, beispielsweise Kartons entlang der Förderstrecke zu transportieren. Der Roboter kann dabei dazu eingerichtet sein, die Objekte an der Übergabestelle aus einer Tasche zu entnehmen und in einem in dem Zugriffsbereich angeordneten Versandbehälter abzulegen. Diese Ausführungsform erspart einen Umladevorgang, da mit dem Roboter unmittelbar in einen Versandbehälter geladen werden kann und somit das Umladen von dem Liegeförderer in einen Versandbehälter entfallen kann.

Die Übergabestelle und/oder der Endeffektor des Roboters kann eine Objekterkennung aufweisen, beispielsweise ein optisches Kamerasystem mit einer Bildverarbeitung, einen RFID-Scanner, einen Barcodescanner und/oder einen QR-Code-Scanner. Die Objekterkennung kann dazu eingerichtet sein, wenigstens eine Objekteigenschaft eines Objekts zu bestimmen, das in einer an der Übergabestelle angeordneten Tasche liegt. Die Objekteigenschaft kann eine Objektgröße, eine Objektausrichtung, eine Objektgeometrie, ein Objektvolumen, eine Objektkantenlänge, Produktdaten des Objekts oder eine Verpackungsart des Objekts umfassen. Vorzugsweise weist der Roboter eine Nachführung auf, die dazu eingerichtet sein kann, abhängig von der wenigstens einen Objekteigenschaft eine Greifbewegung des Roboters für das Entnehmen eines Objekts aus der Tasche an der Übergabestelle nachzuführen. Hiermit kann dem Umstand gedient werden, dass die Objekte einerseits hinsichtlich ihrer Geometrie und physikalischen Eigenschaften untereinander unterschiedlich sein können und im Übrigen im Wesentlichen zufällig in der Tasche ausgerichtet sein können. Letzteres liegt insbesondere daran, dass die Objekte bei der Taschenbeladung in der Regel undefiniert in die Tasche eingeworfen werden.

Die Übergabestelle kann eine in Förderrichtung der Taschenzuführung stromaufwärts von der Übergabestelle ansteigende Anlaufschräge aufweisen, die dazu eingerichtet ist, an der Übergabestelle einen Boden einer an der Übergabestelle angeordneten Tasche zu unterstützen und vorzugsweise anzuheben. Durch die Unterstützung des Taschenbodens und damit eines in der Tasche aufgenommenen Objekts kann das Greifen des Objekts mit dem Roboter unterstützt werden. Alternativ oder zusätzlich kann dabei eine Wägung der Tasche beziehungsweise des Tascheninhalts erfolgen.

Alternativ oder zusätzlich zu der Anlaufschräge kann die Belade- und/oder Entladestation eine Wägevorrichtung an der Übergabestelle aufweisen, die dazu eingerichtet ist, das Gewicht eines an der Übergabestelle in einer Tasche liegenden Objekts zu bestimmen. Die Wägevorrichtung kann vorzugsweise eine in Förderrichtung der Taschenzuführung stromaufwärts zu der Übergabestelle ansteigende Anlaufschräge aufweisen.

Der Roboter kann dazu eingerichtet sein, an der Übergabestelle ein Objekt aus einer Tasche zu entnehmen und an einer Packstation im Zugriffsbereich des Roboter zum Verpacken des Objekts abzulegen.

Der Roboter kann weiterhin dazu eingerichtet ist, mindestens ein Objekt in einen an der Übergabestelle bereitgestellten Versandbehälter zu legen. Der Versandbehälter kann ein Karton, ein Polybag oder eine Produktverpackung des mindestens einen Objekts sein. Der Roboter kann weiterhin dazu eingerichtet sein, auf Basis von das mindestens eine Objekt betreffenden Objektdaten einen geeigneten Versandbehälter auszuwählen. Das Auswählen kann aufgrund von Stammdaten des Objekts, etwa physikalischen Eigenschaften des Objekts, erfolgen. Der Roboter kann dazu eingerichtet sein, den ausgewählten Versandbehälter mit einem Versandlable zu bedrucken. Das Bedrucken kann somit auf das Aufkleben eines Etiketts auf dem Versandbehälter, etwa einem Karton, beschränkt sein. Der Roboter kann vorzugsweise weiterhin dazu eingerichtet sein, den Versandbehälter mit dem darin eingelegten mindestens einen Objekt auf einem Förderband einer Sortiervorrichtung im Zugriffsbereich des Roboter abzulegen, oder an ein fahrerloses Transportsystem zu übergeben, oder an einen Speditionsbehälter, vorzugsweise einen Rollcontainer, zu übergeben.

Der Roboter kann dazu eingerichtet sein, an der Übergabestelle ein Objekt aus einer Tasche zu entnehmen und auf einem Förderband im Zugriffsbereich des Roboter abzulegen. Das Förderband kann dazu eingerichtet sein, das Objekt zum Verpacken einer Packstation zuzuleiten.

Weitere Einzelheiten der Erfindung werden anhand der nachstehenden Figuren erläutert. Dabei zeigt:
- Fig.1: in perspektivischer und schematischer Darstellung einen Ausschnitt aus einem Taschensorter mit einer beispielhaften Ausführungsform einer erfindungsgemäßen Belade- und/oder Entladestation;
- Fig. 2: eine Detailansicht der Ausführungsform gemäß Fig. 2 im Bereich der Übergabestelle; und
- Fig.3-6: in der Draufsicht weitere schematische Ausführungsformen einer Belade- und/oder Entladestation.

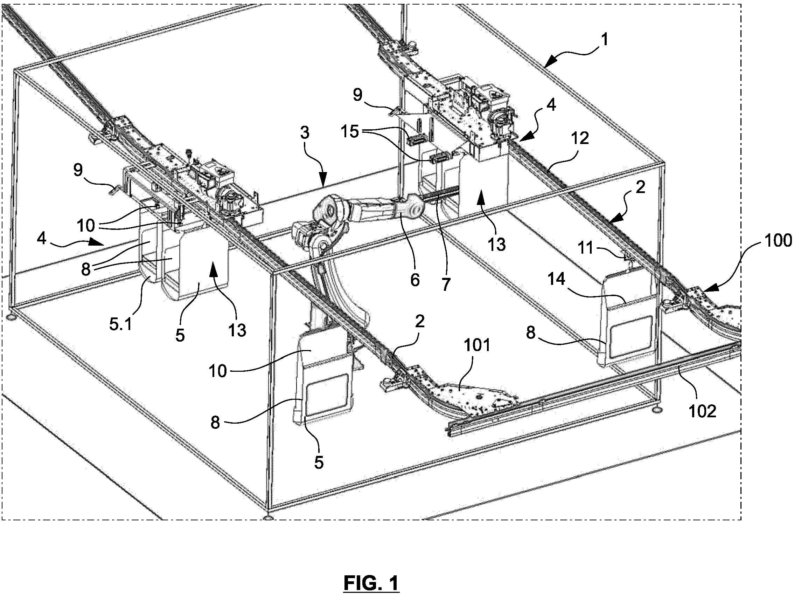

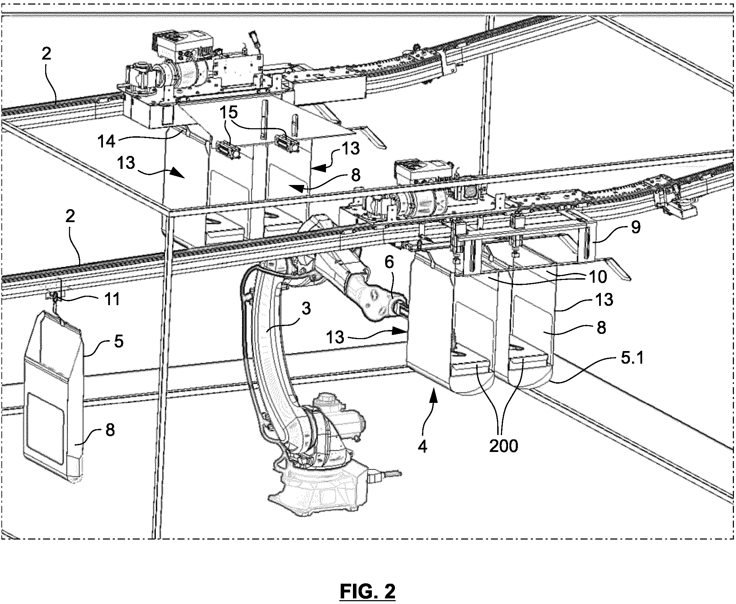

Die Figuren 1 und 2 beschreiben eine vorteilhafte Ausführungsform einer erfindungsgemäßen Belade- und/oder Entladestation 1 für einen Taschensorter 100. Der Taschensorter 100 ist nicht im Detail gezeigt, kann jedoch beispielsweise gemäß der Lehre der WO 2020/128941 A1 ausgebildet sein. Weitere Einzelheiten eines solchen Taschensorters beschreibt auch die EP 4 074 628 A1.

Der Taschensorter 100 kann demgemäß ein Schienensystem 102 aufweisen, welches beispielsweise die dargestellte Belade- und Entladestation 1 mit einem Taschenpuffer (nicht dargestellt) verbindet. Auf Anforderung können einzelne Taschen oder Gruppen von Taschen 5 aus dem Taschenpuffer ausgeschleust und über das Schienensystem 102 in die Taschenzuführungen 2 an gegenüberliegenden Seiten eines Mehrachsroboters 3 eingeleitet, welche jeweils in eine Übergabestelle 4 münden. Dazu können die Taschen 5 über Weichen 101 des Schienensystems 102 in die Taschenzuführungen 2 ausgeschleust werden. Die Taschenzuführungen 2 können aus identischen Förderschienen wie das übrige Schienensystem 102 bestehen. Es sind keine besonderen Maßnahmen erforderlich. Insbesondere ist es nicht erforderlich, dass die Tasche von der Taschenzuführung 2 oder der Übergabestelle 4 gedreht wird. Die Tasche kann während des gesamten Prozesses von der Ausschleusung aus dem Schienensystem 102, über die Weiche 101, und im Verlauf der Taschenzuführung 2 ihre Ausrichtung beibehalten, bei der sie mit ihren breiten Vorder- und Rückwänden 10 senkrecht zur Förderrichtung entlang der jeweiligen Schienen 102, ausgerichtet bleibt. Mithin bleibt die Tasche 5 während des gesamten Vorgangs mit ihren schmalen Seitenwänden 8 parallel zur Förderrichtung ausgerichtet.

Mit dem Erreichen der Übergabestelle 4 läuft die Tasche 5 auf eine Taschenöffnung 9 auf. Dabei wird die Tasche geöffnet. Die Taschenöffnung erfolgt derart, dass ein Tragrahmen 14, welcher die obere Öffnung 10 der Tasche umgibt, in die Horizontale geschwenkt wird. Dabei öffnet sich nicht nur die Öffnung 10 der Tasche 5, sondern auch deren offene Seitenwände 8 werden aufgespannt. Dies ermöglicht dem Mehrachsroboter 3 den einfachen Zugriff auf ein in der Tasche 5 aufgenommenes Objekt 200. Die Übergabestelle 4 weist neben der Taschenöffnung 9 weiterhin eine Objekterkennung 15 auf. Die Objekterkennung 15 kann dazu eingerichtet sein, eine Objekteigenschaft des in der Tasche 5 aufgenommenen Objekts 200 zu bestimmen. Die Objekteigenschaft kann beispielsweise eine Objektgröße, eine Objektausrichtung, eine Objektgeometrie, ein Objektvolumen, eine Objektkantenlänge, Produktdaten des Objekts oder eine Verpackungsart des Objekts sein.

Die dabei gewonnenen Informationen können auf verschiedene Weise verwendet werden. Neben dem Objekttracking kann zusätzlich oder alternativ insbesondere eine Nachführung des Roboter 3 vorgesehen sein, die auf die Objektdaten zurückgreift. Beispielsweise kann eine Greifbewegung des Greifers 7 am Endeffektor 6 des Roboters 3 entsprechend einer Ausrichtung des Objekts 200 in der Tasche 5 nachgeführt sein, um das prozesssichere Greifen des Objekts 200 zu ermöglichen.

Nicht dargestellt ist ein Liegeförderer, mit dem Objekte der Belade- und/oder Entladestation 1 zugeführt oder von dieser abgeführt werden können. Der Liegeförderer kann beispielsweise ein Förderband sein. Der Liegeförderer kann aber auch ein Quergurtsorter oder ein Kippschalensorter sein, der von dem Roboter 3 in eine Tasche 5 zu ladende Objekte in eine Endstelle entlädt. Die Endstelle kann eine Objekterkennung aufweisen, um das prozesssichere Greifen des in die Endstelle abgeworfenen Objekts durch den Greifer 7 des Roboters 3 zu ermöglichen. Für Die Taschenentladung kann das Förderband das Förderband einer Einschleusung in einen Liegesorter sein.

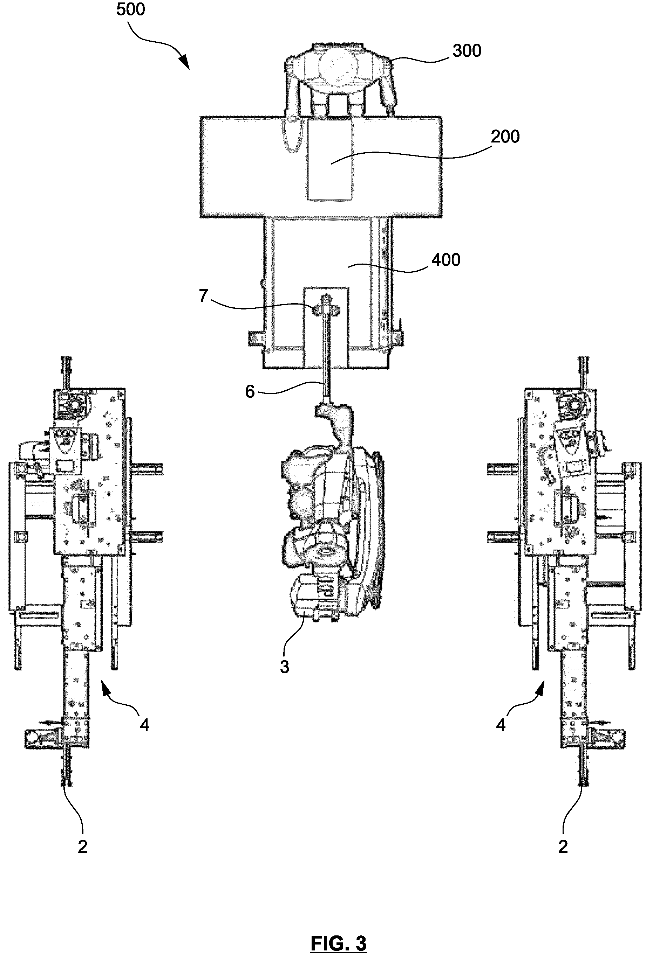

Die Figuren 3 bis 6-zeigen weitere beispielhafte Ausführungsformen einer erfindungsgemäßen Belade- und/oder Entladestation 1 in der Draufsicht. In der bereits mit Bezug auf die Figuren 1 und 2 beschriebenen Weise sind an gegenüberliegenden Seiten von dem Roboter 3 jeweils eine Übergabestelle 4 angeordnet. Der Roboter 3 ist vorliegend als ein Knickarmroboter ausgebildet ist, kann jedoch auch ein anderer Mehrachsroboter, oder ein Portalroboter, oder noch eine andere Roboter sein. Der Roboter weist jeweils einen stabförmigen Endeffektor 6 mit einem distalen Saugreifer 7 auf. Über die Taschenzuführungen 2 können beispielsweise über Weichen aus dem umlaufenden Schienensystem des Taschensorters ausgeschleuste Taschen den Übergabestellen 4 zugeführt werden. Die Übergabestellen 4 können beispielsweise in der mit Bezug auf die Figuren 1 und 2 beschriebenen Weise ausgebildet sein.

Der Roboter 3 ist dazu eingerichtet, Objekte 200, die in einer jeweiligen Tasche an einer der beiden Übergabestellen 4 bereitgestellt sind, aus der Tasche zu entnehmen und bei der Ausführungsform gemäß Figur 3 auf ein Förderband 400 aufzulegen, mit dem das Objekt 200 einer Person 300 für die Weiterverarbeitung zugeführt wird. In der kinematischen Umkehr kann von der Person 300 ein Objekt 200 dem Roboter unter Zuhilfenahme des Förderband 400 zugeführt werden, wobei der Roboter 3 dazu eingerichtet ist, das Objekt 200 von dem Förderband 400 abnehmen und in eine Tasche einzulegen, die an einer der beiden Übergabestellen 4 bereitgestellt ist.

Das Förderband 400 kann beispielsweise Bestandteil einer Packstation 500 sein. Beispielsweise kann der Roboter 3 dazu eingerichtet sein, der Person 300 Objekte 200 zuzuführen, welche für den Versand bestimmt sind. Die Person 300 kann dazu beispielsweise die Objekte in einen Versandbehälter einlegen und für den Versand bereitstellen, beispielsweise durch Ablegen auf einen Liegeförderer. Die Packstation 500 kann zumindest bei einer Ausführungsform für die vollständig versandfertige Verpackung der Objekte 200 eingerichtet sein, sodass die Objekte die Packstation 500 versandfertig verlassen, insbesondere in einem Versandbehälter verpackt sind, einschließlich Adressbeschriftung.

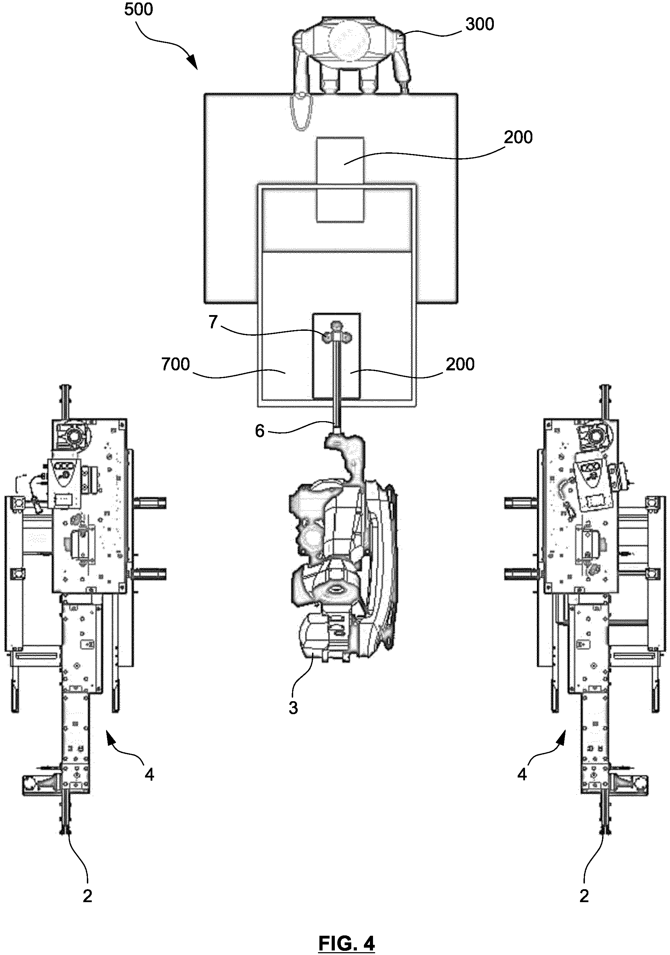

Bei der Ausführungsform gemäß Figur 4 weist die Packstation 500 in Abwandlung der Ausführungsform gemäß Figur 3 anstelle des Förderbands 400 für die Zuführung der Objekte 200 der Person 300 eine Rutsche 700 auf. Der Roboter 3 ist demgemäß dazu eingerichtet, nach dem Entnehmen des Objekts 200 aus einer an der Übergabestelle 4 bereitgestellten Tasche das Objekt an einem oberen Ende der Rutsche 700 abzulegen und freizugeben, beispielsweise durch Unterbrechung eines an dem Sauggreifer 7 bereitgestellten Vakuums, sodass das Objekt 200 schwerkraftgetrieben aus dem Zugriffsbereich des Roboters 3 herausgeführt und in einen für die Person 300 sicheren Zugriffsbereich übergeführt wird. Die Weiterverarbeitung des Objekts 200 durch die 300 kann analog zu der Ausführungsform gemäß Figur 2 erfolgen, insbesondere durch Einlegen des Objekts 200 in einen Versandbehälter.

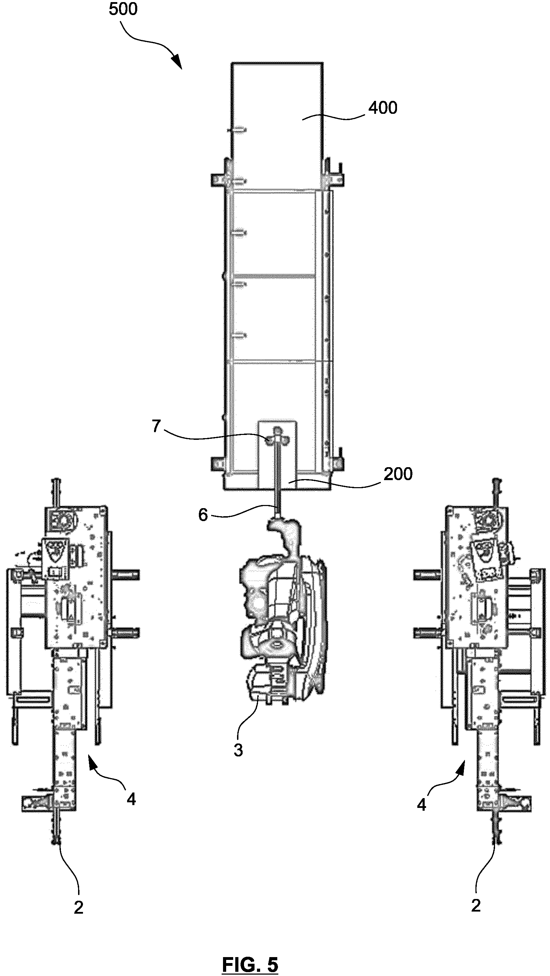

Die Figur 5 zeigt eine Ausführungsform, bei der der Roboter 3 dazu eingerichtet ist, das aus der Tasche entnommene Objekt 200 auf einen Liegeförderer, vorliegend einen Bandförderern 400 aufzulegen. Der Liegeförderer kann wiederum dazu eingerichtet sein, dass Objekt 200 analog zu den Ausführungsformen gemäß Figuren 3 und 4 einer Packstation zuzuführen, oder in einen weiteren Sorter, beispielsweise einen Liegesorter, etwa einen Quergurtsorter oder einen Kippschalensorter, einzuschleusen. Demgemäß kann der Förderer 400 Bestandteil einer Einschleusung für einen Liegesorter sein.

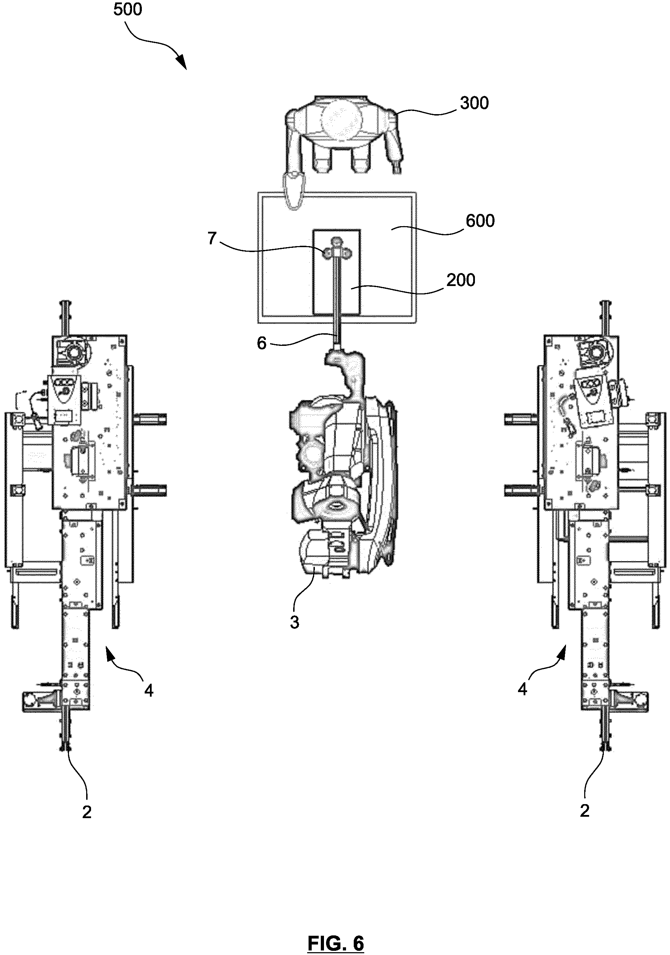

Bei der Ausführungsform gemäß Figur 6 ist vorgesehen, dass der Roboter 3, insbesondere in Abwandlung von den Ausführungsformen gemäß den Figuren 3 und 4 dazu eingerichtet ist, ein aus einer Tasche entnommenes Objekt 200 unmittelbar in einen Versandbehälters 600 abzulegen. Der Versandbehälters 600 kann von einer Person 300 manuell im Zugriffsbereich des Roboters 3 bereitgestellt werden. Alternativ können die Versandbehälter von einem weiteren Förderer bereitgestellt sein, beispielsweise von einem Liegeförderer, beispielsweise von einem Förderband, dessen Förderstrecke den Zugriffsbereich des Roboters 3 durchquert. Für die Präzisierung des Einlegens des Objekts 200 in den Versandbehälters 600 kann der Endeffektor 6 ein Kamerasystem mit einer Nachführung aufweisen, wobei das Kamerasystem dazu eingerichtet ist, eine Ausrichtung des Versandbehälters 600 und/oder eine Ausrichtung des Objekts 200 bzw. eine geometrische Größe des Objekts 200 zu erfassen, wobei die erfassten Daten bei der Nachführung berücksichtigt werden können. Der Roboter 3 kann dazu eingerichtet sein, eine geeignete Versandbehältergröße auszuwählen, beispielsweise auf Basis von Stammdaten des Objekts 200, des Auftragsvolumens, von mit dem Kamerasystem erfassten Daten. Der Roboter 3 kann alternativ oder zusätzlich dazu eingerichtet sein, selbst den Versandbehälter zu befüllen, und/oder zu verschließen und/oder zu labeln.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein. Insbesondere sollen ausschließlich mit Bezug auf die Figuren offenbarte Merkmale nicht auf die Verwendung in der jeweils gezeigten Ausführungsform beschränkt sein.

### Bezugszeichenliste:

- 1: Belade- und/oder Entladestation
- 2: Taschenzuführung
- 3: Roboter
- 4: Übergabestelle
- 5: Tasche
- 5.1: Taschenboden
- 6: Endeffektor
- 7: Greifer
- 8: offenen Seitenwand
- 9: Taschenöffnung
- 10: Öffnung
- 11: Mitnehmer
- 12: Förderschiene
- 13: Vorder- und Rückseite
- 14: Tragrahmen
- 15: Objekterkennung
- 100: Taschensorter
- 101: Weiche
- 102: Schienensystem
- 200: Objekt
- 300: Person
- 400: Liegeförderer/Förderband
- 500: Tisch/Packstation
- 600: Versandbehälter

- 700: Rutsche

## Patentansprüche

1. Belade- und/oder Entladestation (1) für einen Taschensorter (100), mit einer Taschenzuführung (2) und einem Roboter (3), der dazu eingerichtet ist, an wenigstens einer Übergabestelle (4) der Belade- und/oder Entladestation (1) Objekte in eine an der Übergabestelle (4) von der Taschenzuführung (2) bereitgestellte Tasche (5) zu laden oder daraus zu entladen.

2. Belade- und/oder Entladestation (1) nach Anspruch 1, bei der der Roboter (3) ein Mehrachsroboter, vorzugsweise ein Knickarmroboter ist, und/oder einen Endeffektor (6) mit einem Greifer (7) aufweist, vorzugsweise mit einem Zangengreifer oder einem Vakuumgreifer.

3. Belade- und/oder Entladestation (1) nach einem der vorangegangenen Ansprüche, bei der die Tasche (5) mindestens eine offene Seitenwand (8) aufweist und der Roboter (3) dazu eingerichtet ist, über die offene Seitenwand (8) in die Tasche (5) einzugreifen, und/oder wobei der Roboter (3) dazu eingerichtet ist, durch eine obere Taschenöffnung (9) in die Tasche (5) einzugreifen.

4. Belade- und/oder Entladestation (1) nach einem der vorangegangenen Ansprüche, bei der der Roboter (3) dazu eingerichtet ist, quer, vorzugsweise senkrecht, zur Förderrichtung der Taschenzuführung (2) an der Übergabestelle (4) in die Tasche (5) zu greifen.

5. Belade- und/oder Entladestation (1) nach einem der vorangegangenen Ansprüche, bei der die Übergabestelle (4) eine Taschenöffnung (9) aufweist, vorzugsweise mindestens eine Druckschiene, die dazu eingerichtet ist, eine Öffnung (10) eines Tragrahmens (14) der Tasche (5), über den die Tasche (5) in einen Mitnehmer (11) des Taschensorters (100) eingehängt ist, aus einer zur Horizontalen verschwenkten Ausrichtung in die Horizontale oder zumindest weiter in Richtung der Horizontalen zu schwenken.

6. Belade- und/oder Entladestation (1) nach einem der vorangegangenen Ansprüche, bei der der Roboter (3) dazu eingerichtet ist, für das Beladen einer Tasche (5) ein Objekt (200) über einer an der Übergabestelle (4) offenliegenden Öffnung (10) eines Tragrahmens (14) einer zu beladenden Tasche (5) in die Tasche (5) fallen zu lassen.

7. Belade- und/oder Entladestation (1) nach einem der vorangegangenen Ansprüche, bei der die Taschenzuführung (2) eine Förderschiene (12) eines Taschensorters (100) ist, entlang der die Taschen (5) mit ihren breiten Vorder- und Rückseiten (13) quer zur Förderrichtung und unter Aufrechterhaltung ihrer Ausrichtung an der Übergabestelle (4) vorbei gefördert sind.

8. Belade- und/oder Entladestation (1) nach einem der vorangegangenen Ansprüche, bei der an gegenüberliegenden Seiten des Roboter (3) jeweils eine Taschenzuführung (2) mit einer Übergabestelle (4) angeordnet ist.

9. Belade- und/oder Entladestation (1) nach Anspruch 8, bei der der Roboter (3) dazu eingerichtet ist, ein Objekt (200), das in einer Tasche (5) an einer ersten der beiden gegenüberliegenden Übergabestellen (4) bereitgestellt ist, in eine Tasche (5) zu übergeben, die an der zweiten der beiden gegenüberliegenden Übergabestellen (4) bereitgestellt ist.

10. Belade- und/oder Entladestation (1) nach einem der vorangegangenen Ansprüche, die weiterhin einen Liegeförderer, vorzugsweise einen Liegesorter, aufweist, dessen Förderstrecke sich durch einen Zugriffsbereich des Roboter (3) hindurch erstreckt, wobei der Roboter (3) dazu eingerichtet ist, ein Objekt (200) von dem Liegeförderer abzunehmen und an der Übergabestelle (4) in eine Tasche (5) zu laden, oder ein Objekt (200) an der Übergabestelle (4) aus einer Tasche (5) zu entnehmen und auf dem Liegeförderer abzulegen.

11. Belade- und/oder Entladestation (1) nach Anspruch 10, bei der der Liegeförderer dazu eingerichtet ist, Versandbehälter (600), beispielsweise Kartons, entlang der Förderstrecke zu transportieren, wobei der Roboter (3) dazu eingerichtet ist, Objekte (200) an der Übergabestelle (4) aus einer Tasche (5) zu entnehmen und in einem in dem Zugriffsbereich angeordneten Versandbehälter (600) abzulegen.

12. Belade- und/oder Entladestation (1) nach einem der vorangegangenen Ansprüche, bei der die Übergabestelle (4) und/oder der Endeffektor des Roboters (3) eine Objekterkennung (15) aufweist, vorzugsweise ein optisches Kamerasystem mit einer Bildverarbeitung, einen RFID-Scanner, einen Barcodescanner und/oder ein QR-Code-Scanner.

13. Belade- und/oder Entladestation (1) nach Anspruch 12, bei der die Objekterkennung dazu eingerichtet ist, wenigstens eine Objekteigenschaft eines Objekts (200) zu bestimmen, das in einer an der Übergabestelle (4) angeordneten Tasche (5) liegt, vorzugsweise eine Objektgröße, eine Objektausrichtung, eine Objektgeometrie, ein Objektvolumen, eine Objektkantenlänge, Produktdaten des Objekts (200) oder eine Verpackungsart des Objekts (200), wobei besonders bevorzugt der Roboter (3) eine Nachführung aufweist, die dazu eingerichtet ist, abhängig von der wenigstens einen Objekteigenschaft eine Greifbewegung des Roboters (3) für das Entnehmen eines Objekts (200) aus der Tasche (5) an der Übergabestelle (4) nachzuführen.

14. Belade- und/oder Entladestation (1) nach einem der vorangegangenen Ansprüche, bei der die Übergabestelle (4) eine in Förderrichtung der Taschenzuführung (2) stromaufwärts von der Übergabestelle (4) ansteigende Anlaufschräge aufweist, die dazu eingerichtet ist, an der Übergabestelle (4) einen Boden (5.1) einer an der Übergabestelle (4) angeordneten Tasche (5) zu unterstützen und vorzugsweise anzuheben.

15. Belade- und/oder Entladestation (1) nach einem der vorangegangenen Ansprüche, bei der eine Wägevorrichtung an der Übergabestelle (4) angeordnet ist, die dazu eingerichtet ist, das Gewicht eines an der Übergabestelle (4) in einer Tasche (5) liegenden Objekts (200) zu bestimmen, wobei die Wägevorrichtung vorzugsweise eine in Förderrichtung der Taschenzuführung (2) stromaufwärts zu der Übergabestelle (4) ansteigende Anlaufschräge aufweist.

16. Belade- und/oder Entladestation (1) nach einem der vorangegangenen Ansprüche, bei der der Roboter (3) dazu eingerichtet ist, an der Übergabestelle (4) ein Objekt (200) aus einer Tasche (5) zu entnehmen und an einer Packstation (500) im Zugriffsbereich des Roboter (3) zum Verpacken des Objekts (500) abzulegen.

17. Belade- und/oder Entladestation (1) nach einem der vorangegangenen Ansprüche, bei der der Roboter (3) dazu eingerichtet ist, mindestens ein Objekt (200) in einen an der Übergabestelle (4) bereitgestellten Versandbehälter (600) zu legen, wobei der Versandbehälter (600) vorzugsweise ein Karton, ein Polybag oder eine Produktverpackung des mindestens einen Objekts (200) ist, und wobei der Roboter (3) weiterhin dazu eingerichtet ist, auf Basis von das mindestens eine Objekt (200) betreffenden Objektdaten einen geeigneten Versandbehälter (600) aus einer Auswahl von Versandbehältern (600) auszuwählen, wobei der Roboter (3) vorzugsweise weiterhin dazu eingerichtet ist, den ausgewählten Versandbehälter (600) mit Füllmaterial zu füllen, wobei der Roboter (3) vorzugsweise weiterhin dazu eingerichtet ist, den ausgewählten Versandbehälter (600) zu verschließen, wobei der Roboter (3) vorzugsweise weiterhin dazu eingerichtet ist, den ausgewählten Versandbehälter (600) mit einem Versandlable zu bedrucken, und wobei der Roboter (3) vorzugsweise weiterhin dazu eingerichtet ist, den ausgewählten Versandbehälter (600) mit dem darin eingelegten mindestens einen Objekt (200) auf einem Förderband (400) im Zugriffsbereich des Roboter (3) abzulegen, oder an ein fahrerloses Transportsystem zu übergeben, oder an einen Speditionsbehälter, vorzugsweise einen Rollcontainer, zu übergeben.

18. Belade- und/oder Entladestation (1) nach einem der vorangegangenen Ansprüche, bei der der Roboter (3) dazu eingerichtet ist, an der Übergabestelle (4) ein Objekt (200) aus einer Tasche (5) zu entnehmen und auf einem Förderband (400) im Zugriffsbereich des Roboter (3) abzulegen, wobei das Förderband (400) dazu eingerichtet ist, das Objekt zum Verpacken einer Packstation (500) zuzuleiten.

## Geänderte Patentansprüche

### Geänderte Patentansprüche gemäss Regel 137(2) EPÜ.

1. Belade- und/oder Entladestation (1) für einen Taschensorter (100), mit einer Tasche (5), einer Taschenzuführung (2), welche eine Förderschiene (12) eines Taschensorters (100) ist, und einem Roboter (3), der dazu eingerichtet ist, an wenigstens einer Übergabestelle (4) der Belade- und/oder Entladestation (1) Objekte in die an der Übergabestelle (4) von der Taschenzuführung (2) bereitgestellte Tasche (5) zu laden oder daraus zu entladen, wobei der Roboter (3) ein Mehrachsroboter, vorzugsweise ein Knickarmroboter ist, und/oder einen Endeffektor (6) mit einem Greifer (7) aufweist, vorzugsweise mit einem Zangengreifer oder einem Vakuumgreifer, wobei die Tasche (5) mindestens eine offene Seitenwand (8) aufweist und der Roboter (3) dazu eingerichtet ist, über die offene Seitenwand (8) in die Tasche (5) einzugreifen, und/oder wobei der Roboter (3) dazu eingerichtet ist, durch eine obere Taschenöffnung (9) in die Tasche (5) einzugreifen, wobei die Übergabestelle (4) und/oder der Endeffektor des Roboters (3) eine Objekterkennung (15) aufweist, vorzugsweise ein optisches Kamerasystem mit einer Bildverarbeitung, einen RFID-Scanner, einen Barcodescanner und/oder ein QR-Code-Scanner, wobei die Objekterkennung (15) dazu eingerichtet ist, wenigstens eine Objekteigenschaft eines Objekts (200) zu bestimmen, das in einer an der Übergabestelle (4) angeordneten Tasche (5) liegt.

2. Belade- und/oder Entladestation (1) nach einem der vorangegangenen Ansprüche, bei der der Roboter (3) dazu eingerichtet ist, quer, vorzugsweise senkrecht, zur Förderrichtung der Taschenzuführung (2) an der Übergabestelle (4) in die Tasche (5) zu greifen.

3. Belade- und/oder Entladestation (1) nach einem der vorangegangenen Ansprüche, bei der die Übergabestelle (4) eine Taschenöffnung (9) aufweist, welche mindestens eine Druckschiene umfasst, die dazu eingerichtet ist, eine Öffnung (10) eines Tragrahmens (14) der Tasche (5), über den die Tasche (5) in einen Mitnehmer (11) des Taschensorters (100) eingehängt ist, aus einer zur Horizontalen verschwenkten Ausrichtung in die Horizontale oder zumindest weiter in Richtung der Horizontalen zu schwenken.

4. Belade- und/oder Entladestation (1) nach einem der vorangegangenen Ansprüche, bei der der Roboter (3) dazu eingerichtet ist, für das Beladen einer Tasche (5) ein Objekt (200) über einer an der Übergabestelle (4) offenliegenden Öffnung (10) eines Tragrahmens (14) einer zu beladenden Tasche (5) in die Tasche (5) fallen zu lassen.

5. Belade- und/oder Entladestation (1) nach einem der vorangegangenen Ansprüche, wobei die Taschen (5) entlang der Förderschiene (12) mit ihren breiten Vorder- und Rückseiten (13) quer zur Förderrichtung und unter Aufrechterhaltung ihrer Ausrichtung an der Übergabestelle (4) vorbei gefördert sind.

6. Belade- und/oder Entladestation (1) nach einem der vorangegangenen Ansprüche, bei der an gegenüberliegenden Seiten des Roboters (3) jeweils eine Taschenzuführung (2) mit einer Übergabestelle (4) angeordnet ist.

7. Belade- und/oder Entladestation (1) nach Anspruch 6, bei der der Roboter (3) dazu eingerichtet ist, ein Objekt (200), das in einer Tasche (5) an einer ersten der beiden gegenüberliegenden Übergabestellen (4) bereitgestellt ist, in eine Tasche (5) zu übergeben, die an der zweiten der beiden gegenüberliegenden Übergabestellen (4) bereitgestellt ist.

8. Belade- und/oder Entladestation (1) nach einem der vorangegangenen Ansprüche, die weiterhin einen Liegeförderer, vorzugsweise einen Liegesorter, aufweist, dessen Förderstrecke sich durch einen Zugriffsbereich des Roboter (3) hindurch erstreckt, wobei der Roboter (3) dazu eingerichtet ist, ein Objekt (200) von dem Liegeförderer abzunehmen und an der Übergabestelle (4) in eine Tasche (5) zu laden, oder ein Objekt (200) an der Übergabestelle (4) aus einer Tasche (5) zu entnehmen und auf dem Liegeförderer abzulegen.

9. Belade- und/oder Entladestation (1) nach Anspruch 8, bei der der Liegeförderer dazu eingerichtet ist, Versandbehälter (600), beispielsweise Kartons, entlang der Förderstrecke zu transportieren, wobei der Roboter (3) dazu eingerichtet ist, Objekte (200) an der Übergabestelle (4) aus einer Tasche (5) zu entnehmen und in einem in dem Zugriffsbereich angeordneten Versandbehälter (600) abzulegen.

10. Belade- und/oder Entladestation (1) nach einem der vorangehenden Ansprüche, bei der die Objekterkennung dazu eingerichtet ist, eine Objektgröße, eine Objektausrichtung, eine Objektgeometrie, ein Objektvolumen, eine Objektkantenlänge, Produktdaten des Objekts (200) oder eine Verpackungsart des Objekts (200) zu bestimmen, wobei besonders bevorzugt der Roboter (3) eine Nachführung aufweist, die dazu eingerichtet ist, abhängig von der wenigstens einen Objekteigenschaft eine Greifbewegung des Roboters (3) für das Entnehmen eines Objekts (200) aus der Tasche (5) an der Übergabestelle (4) nachzuführen.

11. Belade- und/oder Entladestation (1) nach einem der vorangegangenen Ansprüche, bei der die Übergabestelle (4) eine in Förderrichtung der Taschenzuführung (2) stromaufwärts von der Übergabestelle (4) ansteigende Anlaufschräge aufweist, die dazu eingerichtet ist, an der Übergabestelle (4) einen Boden (5.1) einer an der Übergabestelle (4) angeordneten Tasche (5) zu unterstützen und vorzugsweise anzuheben.

12. Belade- und/oder Entladestation (1) nach einem der vorangegangenen Ansprüche, bei der eine Wägevorrichtung an der Übergabestelle (4) angeordnet ist, die dazu eingerichtet ist, das Gewicht eines an der Übergabestelle (4) in einer Tasche (5) liegenden Objekts (200) zu bestimmen, wobei die Wägevorrichtung vorzugsweise eine in Förderrichtung der Taschenzuführung (2) stromaufwärts zu der Übergabestelle (4) ansteigende Anlaufschräge aufweist.

13. Belade- und/oder Entladestation (1) nach einem der vorangegangenen Ansprüche, bei der der Roboter (3) dazu eingerichtet ist, an der Übergabestelle (4) ein Objekt (200) aus einer Tasche (5) zu entnehmen und an einer Packstation (500) im Zugriffsbereich des Roboters (3) zum Verpacken des Objekts (500) abzulegen.

14. Belade- und/oder Entladestation (1) nach einem der vorangegangenen Ansprüche, bei der der Roboter (3) dazu eingerichtet ist, mindestens ein Objekt (200) in einen an der Übergabestelle (4) bereitgestellten Versandbehälter (600) zu legen, wobei der Versandbehälter (600) vorzugsweise ein Karton, ein Polybag oder eine Produktverpackung des mindestens einen Objekts (200) ist, und wobei der Roboter (3) weiterhin dazu eingerichtet ist, auf Basis von das mindestens eine Objekt (200) betreffenden Objektdaten einen geeigneten Versandbehälter (600) aus einer Auswahl von Versandbehältern (600) auszuwählen, wobei der Roboter (3) vorzugsweise weiterhin dazu eingerichtet ist, den ausgewählten Versandbehälter (600) mit Füllmaterial zu füllen, wobei der Roboter (3) vorzugsweise weiterhin dazu eingerichtet ist, den ausgewählten Versandbehälter (600) zu verschließen, wobei der Roboter (3) vorzugsweise weiterhin dazu eingerichtet ist, den ausgewählten Versandbehälter (600) mit einem Versandlable zu bedrucken, und wobei der Roboter (3) vorzugsweise weiterhin dazu eingerichtet ist, den ausgewählten Versandbehälter (600) mit dem darin eingelegten mindestens einen Objekt (200) auf einem Förderband (400) im Zugriffsbereich des Roboter (3) abzulegen, oder an ein fahrerloses Transportsystem zu übergeben, oder an einen Speditionsbehälter, vorzugsweise einen Rollcontainer, zu übergeben.

15. Belade- und/oder Entladestation (1) nach einem der vorangegangenen Ansprüche, bei der der Roboter (3) dazu eingerichtet ist, an der Übergabestelle (4) ein Objekt (200) aus einer Tasche (5) zu entnehmen und auf einem Förderband (400) im Zugriffsbereich des Roboters (3) abzulegen, wobei das Förderband (400) dazu eingerichtet ist, das Objekt zum Verpacken einer Packstation (500) zuzuleiten.
